# DEMANDE DE BREVET EUROPEEN

(11) **EP 2 112 113 A1**
(43) Date de publication de la demande: **28.10.2009**
(21) Numéro de dépôt: 08370010.4
(22) Date de dépôt: 25.04.2008
(51) Int. Cl.: B65H 75/36, B65H 75/44, F16L 3/133, F16L 3/22, F16L 3/24

(54) **Dispositif de rangement de câbles et tuyaux**

(71) Demandeur: Delattre, Jean-Yves, 59134 Fournes en Weppes (FR)
(72) Inventeur: Delattre, Jean-Yves, 59134 Fournes en Weppes (FR)

(57) **Abrégé**

L'invention concerne un dispositif de rangement de tuyaux et câbles, notamment électriques. Elle est constituée d'une plaque (1) dans laquelle sont réalisées des encoches débouchantes (2), comprenant au moins une ouverture (4) inférieure pour le maintien ergonomique du support pendant la mise en place du câble et la préhension pour l'accrochage sur des supports en hauteur et au moins une ouverture (5) supérieure pour le transport de l'ensemble, ainsi qu'une poignée (31) pour la manutention, des moyens d'accrochage (7), ouverts vers le bas, placés sous la poignée et à coté de la poignée

Selon des variantes les encoches sont munies de joints souples (3), sur au moins l'une des faces intérieures, ou réalisées en forme de chicanes (18) pour assurer le blocage des câbles. Le tuyau ou câble est rangé par boucles successives dans les encoches.

Application pour le rangement des tuyaux et câbles, notamment électriques de façon ergonomique, rapide, en évitant de les emmêler lors d'une utilisation ultérieure, pour applications domestiques et industrielles.

## Description

La présente invention concerne un dispositif de rangement de câbles et tuyaux.

L'invention permettra notamment de ranger et de stocker aisément des câbles électriques tout en permettant lors d'une utilisation ultérieure d'éviter que ces derniers ne s'emmêlent lors du dévidage.

La présente invention s'applique donc à la fois aux domaines d'utilisation de câbles électriques ou de rallonges pour les particuliers, pour le jardinage, le bricolage mais aussi pour les entreprises et industries par exemple dans le cas des chantiers.

A l'heure actuelle, les câbles sont généralement rangés au moyen d'enrouleurs. Cependant d'autres dispositifs ont été développés. On connaît plusieurs dispositifs de rangement de câble dont le principe est basé sur le stockage, de boucles successives, réalisé sur un support de type plaque. Les boucles sont placées par l'utilisateur dans des fentes réalisées dans un support.

On connaît le dispositif décrit dans la publication US5429321 qui définit un principe de pincement du câble, par compression de ce dernier, pour éviter qu'il ne glisse lors de la constitution des boucles.

On connaît également le dispositif décrit dans la publication US 60003803 permettant d'enrouler les câbles dans un sens dans une fente puis dans l'autre sens dans la seconde fente.

Les dispositifs par enroulement présentent différents inconvénients, en particulier ils ne sont pas fonctionnels aussi bien pour enrouler les câbles que pour les dérouler. Par ailleurs ils sont lourds et ne peuvent être accrochés à proximité de la zone d'utilisation. Il est parfois nécessaire de dérouler l'ensemble du câble, ne serait ce que pour le connecter à une prise située en hauteur. Les dispositifs à plaques ont une capacité limitée en en ce sens que les boucles sont logées dans des rainures de même largeur que le câble.

La présente invention a pour but de pallier ces différents inconvénients, les principaux objectifs, non exhaustifs, consistant à concevoir un dispositif de rangement de câbles, permettant d'éviter l'emmêlement de ces derniers lors du dévidage, muni de plusieurs poignées de préhension, et de plusieurs crochets pour faciliter la fixation lors de l'utilisation et du stockage, particulièrement adapté aux câbles de grande longueur.

Selon l'invention l'enroulement des câbles sur le support s'effectue en restant debout, le dispositif étant supporté par une main, l'autre main constituant les boucles successives dans des encoches prévues à cet effet. Cette position évite de se baisser, et permet par ailleurs de remplir et de vider très rapidement le support.

En outre, l'invention de part sa conception permet d'augmenter la capacité de stockage des câbles et tuyaux en réalisant des encoches de largeur comprises entre la valeur du diamètre du câble et le double de cette valeur. En effet lors du remplissage des câbles ou tuyaux, le maintien en position de la dernière boucle constituée, est réalisé par la main de l'utilisateur, de façon à éviter le glissement de la boucle.

Le dispositif est muni de plusieurs crochets ouverts verts le bas, permettant de le fixer aussi bien sur la barre d'une tondeuse, qu'une échelle ou tous autres supports lors de l'utilisation et du stockage. En outre l'invention permet le stockage de longs câbles électriques, 100 m voire plus.

En outre l'invention concerne également un dispositif, munis de joints souples pour assurer le blocage des câbles, ou constitué de chicanes pour le freiner.

L'invention sera mieux comprise au vu des planches de dessins situés en annexe et qui comprennent :

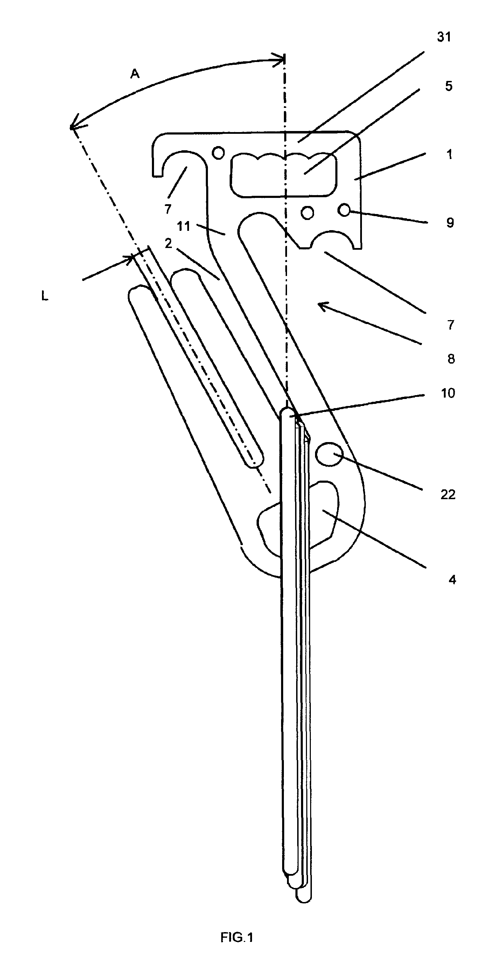

- La figure 1 illustrant un schéma de principe.
- La figure 2 illustrant la position de câbles dans les encoches.
- La figure 3 montrant une position du support lors du remplissage.
- La figure 4 illustrant un principe de chicane pour blocage du câble.

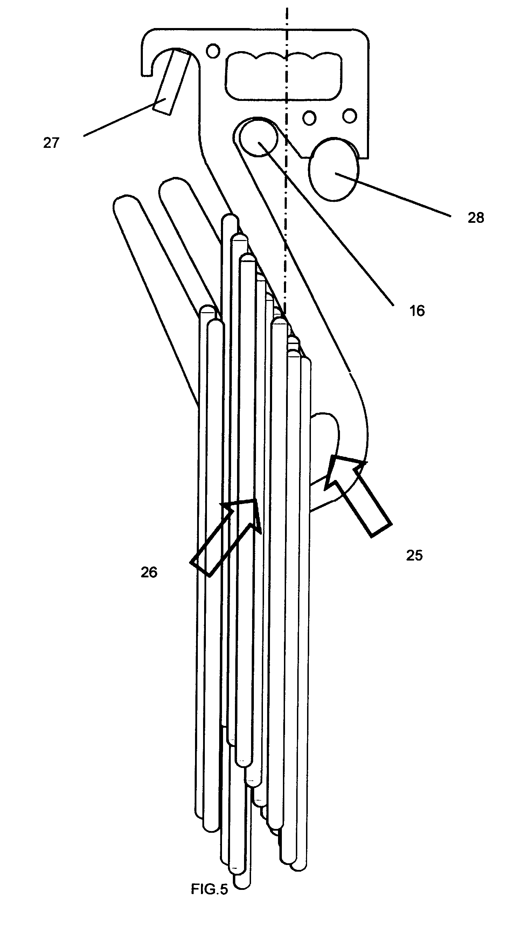

- La figure 5 montrant des exemples de fixation du support.

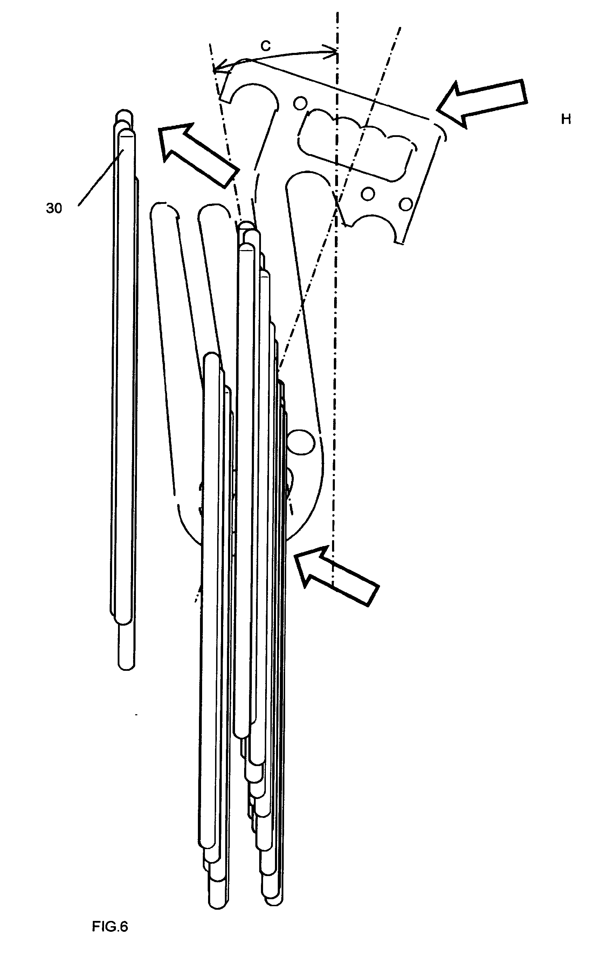

- La figure 6 illustrant un exemple de dévidage du support.
- La figure 7 illustrant un principe de joint de maintien.
- La figure 8 montrant un exemple de fixation de joint amovible.

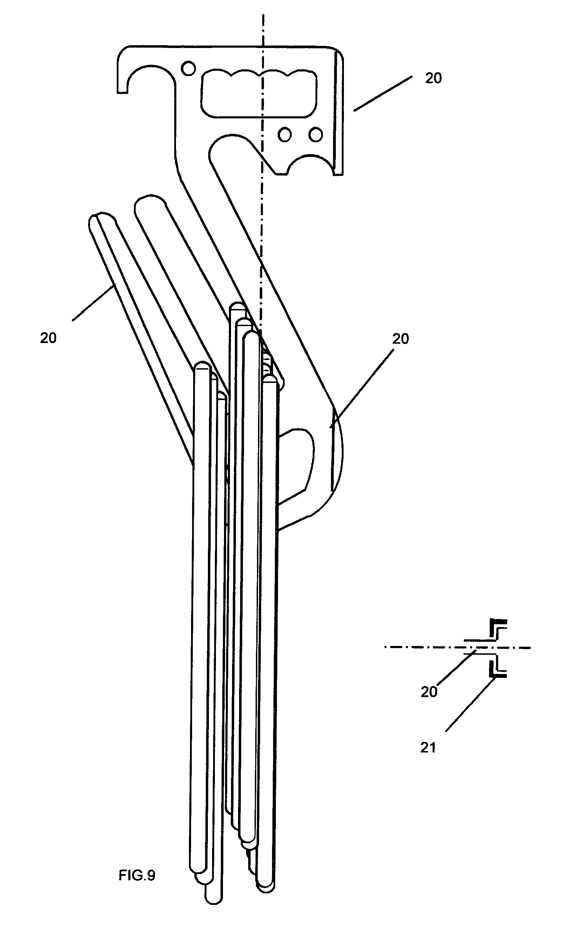

- La figure 9 illustrant un principe de support mural.

L'invention concerne un dispositif de rangement de tuyaux ou câbles notamment électrique enroulés en boucles **caractérisé en ce qu**'il comprend dans une plaque (1) d'encombrement et poids réduit :
- des encoches débouchantes vers le haut, sensiblement parallèles, (2) pour le stockage par appui de la partie supérieure de l'enroulement des boucles de tuyaux ou câbles pendant verticalement par gravité du côté opposé ;
- au moins une ouverture (4) inférieure pour le maintien du support pendant la mise en place du câble et la préhension pour l'accrochage sur des points en hauteur ;
- au moins une ouverture (5) supérieure pour le transport de l'ensemble ;
- une poignée (31) pour la manutention ;
- des moyens d'accrochage (7), ouverts vers le bas disposés sous la poignée et à coté de la poignée.
- des trous de passage (9) d'autres éléments de fixation.

La présente invention a pour but d'apporter une solution au rangement, au transport, et à l'utilisation des câbles électriques ou tuyaux (10) dans d'excellentes conditions ergonomiques, l'entreposage facile de l'ensemble après utilisation mais aussi de permettre une mise à disposition aisée de cette alimentation en apportant des solutions pour la fixation du support à proximité du lieu de travail.

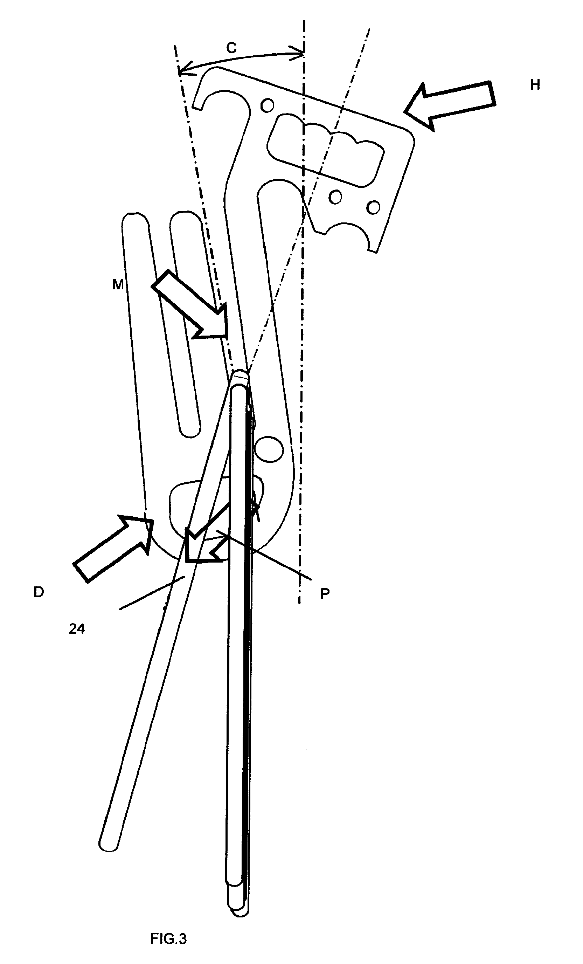

La figure 3 illustre un mode d'utilisation du support pendant le remplissage. L'utilisateur place le pouce P dans l'ouverture inférieure (4) et tiens le support avec les doigts D, selon un angle C par rapport à la verticale. Le support est appuyé contre le corps H de l'utilisateur. L'autre main M de l'utilisateur constitue les boucles successives dans les encoches. Lors de la constitution de chaque boucle, le pouce P exerce un faible effort de maintien sur le brun vertical (24) de la dernière boucle, et évite ainsi le glissement de cette dernière. Lorsqu'une encoche est remplie on passe à la suivante. Cette opération se réalise à l'arrêt ou en marchant. Le dispositif est muni d'une poignée (31) pour le transport de l'ensemble.

Le support est muni de cochets (7) ouverts vers le bas, permettant la fixation sur de nombreux points, on peut citer de façon non exhaustive, une barre de tondeuse, une échelle, une branche.

En outre l'ouverture inférieure (4) servira de prise (25) ou (26), pour effectuer l'accrochage sur des points situés en hauteur (27) ou (28). Cette opération est facilitée par le poids réduit du dispositif, de l'ordre de 300 à 400 g.

Lors du dévidage, il est possible de prendre un ensemble de plusieurs boucles (30), des les extraire et les laisser tomber par terre, éventuellement en marchant à vive allure. Il est à noter que les câbles ne sont pas emmêlés.

Pour de nombreuses applications, il est nécessaire d'amener l'alimentation électrique un plus près de l'utilisation, en effet les câbles électriques des outillages à alimenter sont en général très courts. Par ailleurs dans le cas d'application en hauteur, il est intéressant de pouvoir fixer le support à proximité de la zone de travail. La présente invention s'applique par conséquent aux domaines très variés du jardinage, bricolage, des chantiers et des applications domestiques.
Elle répond parfaitement aux objectifs d'ergonomie et de rapidité dans sa mise en oeuvre.

Le support est équipé de plusieurs trous (9) et de crochets (7) de façon à pouvoir l'accrocher en de nombreux endroits aussi bien pendant le stockage que pendant l'utilisation. Un autre avantage est de pouvoir fixer le support à proximité du lieu de travail, par exemple sur la barre d'une tondeuse (16), sur une branche (28), une échelle mais aussi de procéder à l'enroulage et au dévidage sans avoir à se baisser.

La longueur de câble rangée sur un support est d'environ 50 m dans le cas d'un câble de diamètre de 8 mm, et peut être portée à 100 m voire plus en fonction du nombre et de la dimension des encoches. Le temps nécessaire au remplissage du support avec un câble de 50 m est inférieur à une minute.

La présente invention peut pour sa réalisation faire appel à une grande variété de technologies. On peut citer à titre d'exemple et de façon non exhaustive, l'injection des matières plastiques, le roto moulage, le soufflage, l'usinage, la compression.
De nombreux matériaux peuvent être utilisés: le plastique, le bois, les métaux.

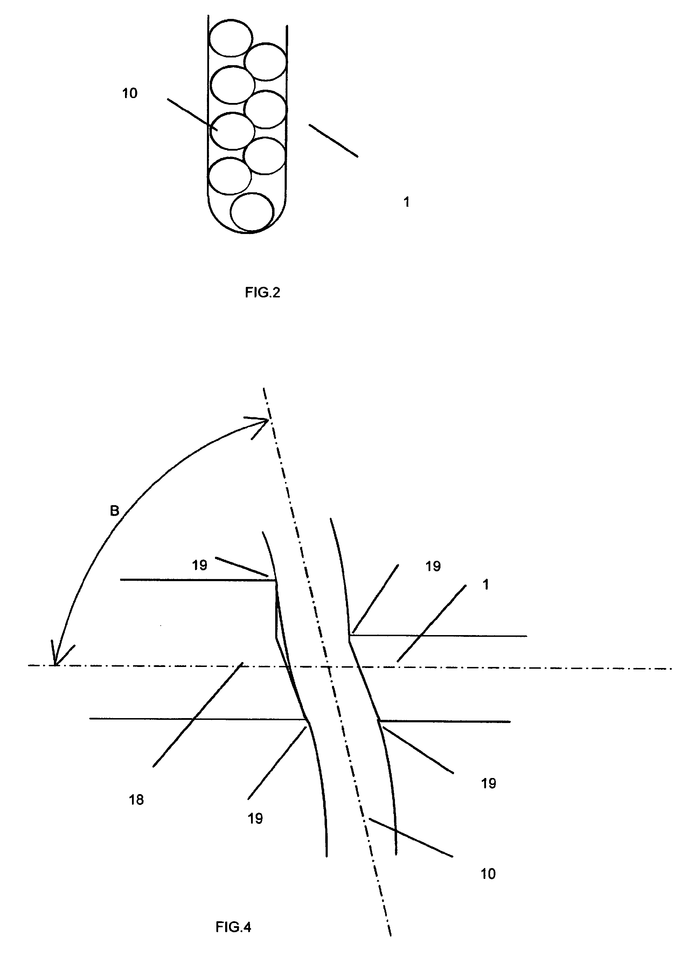

Le support selon l'invention est constitué d'une plaque (1) d'encombrement et de poids réduits, dans laquelle plusieurs encoches débouchantes (2) inclinées selon un angle A par rapport à l'axe principal du support sont réalisées. La largeur L des encoches est, selon un mode préférentiel, inférieure à deux fois le diamètre du câble, de façon à conserver l'ordre de remplissage, comme illustré par la fig. 2. Une ou plusieurs zones de préhensions (4), éventuellement équipées de logements pour positionner les doigts sont réalisées sur la plaque pour assurer le maintien ergonomique du support pendant la mise en place du câble. Les mêmes zones de préhension (4) ou d'autre spécifiques (5) permettent le transport aisé de l'ensemble.

Une ou plusieurs crochets (7) ouverts vers le bas, situés sous la poignée et à coté de la poignée, permettant d'accrocher le support selon de nombreuses configurations. Une ouverture (8), en forme de hanse, permet également d'accrocher le support. Un ensemble de trous (9) disposés en différents endroits de la plaque assure également cette fonction.

La présente invention a pour but d'apporter une réponse au rangement des câbles ou tuyaux (10) dans d'excellentes conditions ergonomiques, l'entreposage facile de l'ensemble après utilisation mais aussi de permettre une mise à disposition aisée de cette alimentation par fixation du support près du lieu de travail.
En outre des modes de réalisation particuliers sont envisagés.

Pour éviter le glissement des câbles et tuyaux dans les encoches, ces dernières sont garnies, sur au moins l'une des faces intérieures, de joints souples ou à lèvre (3). Ce joint a pour fonction de maintenir le câble en position juste après sa mise en place dans l'encoche et d'éviter tout glissement pendant la constitution de la boucle suivante. La souplesse et la valeur de l'écrasement du joint (3) sont déterminées de façon à optimiser la fonction de maintien. C'est bien la compression du joint qui maintient le câble en position.

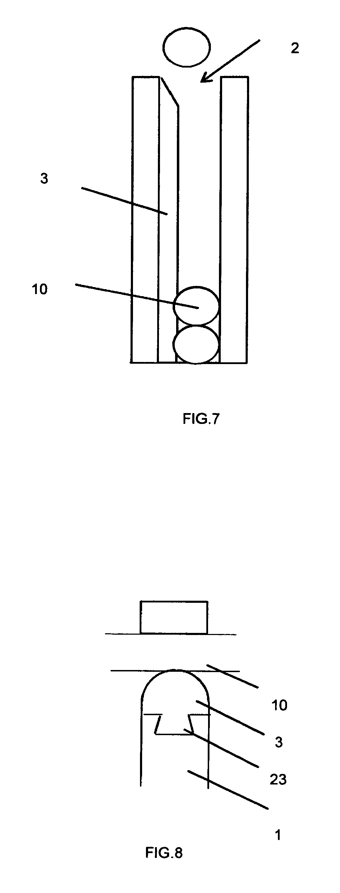

L'élément souple ou à lèvre, amovible, pourra être soit rapporté sur le support, encliqueté, collé ou directement injecté. Ces éléments souples (3) pourront être d'épaisseurs variables comme illustré par la fig. 7 et rapportés sur le support de façon à s'adapter au diamètre du fil (10). Une technique de fixation par maintien mécanique (23) du joint (3) permet de rendre un même support compatible avec différents diamètres de fil (10). Cette fonction peut également être assurée au moyen des chicanes (18), réalisées dans les encoches. Elles sont inclinées d'un angle B par rapport au plan de la plaque (1) et comportent plusieurs arrêtes (19) qui réalisent le freinage et le blocage du câble.

Selon d'autres variantes, la poignée (31) est munie de logements pour positionner les doigts et faciliter la prise en main. Sur le pourtour, une conformation d'accrochage murale additionnelle de type tenon (20) s'adapte de manière complémentaire en fixation amovible à un élément de support mural (21). Des prises électriques (22) simples ou multiples sont intégrées à la plaque (1), est reliées à l'une des extrémités du câble.

L'appareil selon l'invention peut être réalisé en matière plastique injectée, avec en particulier une optimisation des épaisseurs et d'une manière générale des dimensions, en particulier dans les zones de contraintes (11). Dans le cas de l'injection plastique les éléments souples ou lèvres (3) peuvent être également injectés selon le principe de l'injection bi matière.

La fonction maintien du câble pourra également être assurée par la souplesse de la zone (3) dans le cas de réalisation en soufflage.

Selon une autre variante il est possible de prévoir des joints (3) interchangeables de façon à utiliser un même support, pour des câbles de diamètres différents. L'écart du diamètre du câble étant compensé par la nouvelle épaisseur du joint.

Le nombre d'encoches n'est pas limité. Elles peuvent être de longueurs différentes par exemple pour des raisons d'implantation sur la plaque, mais aussi d'optimisation pour améliorer l'ergonomie. Elles peuvent être de largeurs différentes, pour ranger plusieurs câbles.

## Revendications

1. Dispositif de rangement de tuyaux ou câbles notamment électrique enroulés en boucles **caractérisé en ce qu'**il comprend dans une plaque (1) d'encombrement et de poids réduit :
- des encoches débouchantes vers le haut, sensiblement parallèles, (2) pour le stockage par appui de la partie supérieure de l'enroulement des boucles de tuyaux ou câbles pendant verticalement par gravité du côté opposé ;
- au moins une ouverture (4) inférieure pour le maintien du support pendant la mise en place du câble et la préhension pour l'accrochage sur des supports en hauteur ;
- au moins une ouverture (5) supérieure, définissant la poignée pour le transport de l'ensemble ;

2. Dispositif selon la revendication 1, **caractérisé en ce qu'**il comporte, sous la poignée et à coté de la poignée, des moyens d'accrochage (7), ouverts vers le bas.

3. Dispositif selon l'une quelconque des revendications 1 et 2, **caractérisé en ce que** la largeur L des encoches est inférieure à deux fois le diamètre du câble.

4. Dispositif selon les revendications 1 et 2, **caractérisé en ce que** les encoches (2) comportent des chicanes (18) inclinées d'un angle B par rapport au plan de la plaque (1) et comportant plusieurs arrêtes (19) qui assurent le blocage du câble.

5. Dispositif selon les revendications 1 et 2, **caractérisé en ce que** les encoches débouchantes sont garnies de joints souples ou à lèvre (3), sur au moins l'une des faces intérieures.

6. Dispositif selon l'une quelconque des revendications précédentes, **caractérisé en ce que** les encoches débouchantes parallèles ont une direction principale inclinée d'un angle A vers l'avant par rapport à la direction principale de la plaque

7. Dispositif selon les revendications 5 à 6 ,**caractérisé en ce que** les joints souples ou à lèvres (3) sont amovibles et fixés par une technique de maintien mécanique (23) du joint (3) permettant d'utiliser un même support (1) pour différents diamètres de tuyaux ou câbles (10).

8. Dispositif selon l'une quelconque des revendications précédentes, **caractérisé par le fait qu'**il comporte au moins une ouverture (4,5) faisant office de poignée ergonomique équipée de logement pour positionner les doigts pour assurer le maintien et le transport de la plaque (1).

9. Dispositif selon l'une quelconque des revendications précédentes, **caractérisé par le fait qu'**il comprend notamment sur le pourtour, une conformation additionnelle d'accrochage mural de type tenon (20) s'adaptant de manière complémentaire en fixation amovible à un élément de support mural (21).

10. Dispositif selon l'une quelconque des revendications précédentes **caractérisé par le fait qu'**il comprend des prises électriques (22) simples ou multiples intégrées à la plaque (1), est reliées à l'une des extrémités du câble.
